# EUROPEAN PATENT SPECIFICATION

(11) **EP 0 347 165 B1**
(45) Date of publication and mention of the grant of the patent: **24.11.1993**
(21) Application number: 89305954.3
(22) Date of filing: 13.06.1989
(51) Int. Cl.: F16H 1/45, B60K 17/348

(54) **Differential unit**
Differentialeinheit
Unité de différentiel

(30) Priority: 15.06.1988 GB 8814226; 14.07.1988 GB 8816712
(43) Date of publication of application: 20.12.1989
(73) Proprietor: GROUP LOTUS LIMITED, Norwich Norfolk NR14 8EZ (GB)
(72) Inventor: Mace, Graham Henry, Basildon,Essex (GB)
(74) Representative: Mayes, Stuart David

(56) References cited:
- EP-A- 0 032 994
- WO-A-87/00900
- US-A- 1 859 245
- US-A- 1 869 528
- US-A- 2 178 613

## Description

The invention relates to differential units.

Differential units are commonly employed in road vehicles to divide the drive from the engine between road wheels on opposed sides of the vehicle. A differential unit capable of dividing the incoming torque in a predetermined way unequally between two output shafts, and/or of applying a torque bias, in particular, a bias responsive to output shaft torque reaction, would find application, for example, in a four wheel drive vehicle, to divide the torque from the engine between the front and the rear wheels. The invention is accordingly concerned with the provision of a differential unit providing such capabilities.

US Patent US-A-1869528 in the name of Trbojevich discloses a differential unit having two internally toothed output gears of different diameters, a first set of intermediate gears engaging one of the output gears and second set engaging the other output gear and both sets of intermediate gears engaging each other. The intermediate gears of both sets are mounted in a spider which provides the input for the differential. The intermediate gears of both sets all rotate about axes which are equispaced at a particular radial distance from the axis of rotation common to the two output gears and the spider. The intermediate gears are of spur type and the geometric configuration of the whole arrangement is designed to minimise loading on the teeth of the gears and on the bearings mounting the differential (the use of spur gears avoiding axial loading).

The present invention is concerned with the provision of a differential unit of advantageous gear configuration and which can provide an unequal split of output torque divided from the input torque. The differential unit of the invention can incorporate simple means, preferably selectively adjustable, for limiting slip between the output members.

The present invention provides a differential unit having a gear carrier arranged to be rotatably driven about a first axis thereof,
output gearing comprising a first output gear of a first diameter and a second output gear of a second larger diameter journalled by the carrier for rotation about said first axis, and
intermediate gearing comprising
a first set of intermediate gears each journalled by the carrier for rotation about one of a first plurality of intermediate gear axes equidistant from and parallel to the said first axis at a first radial distance therefrom and
a second set of intermediate gears each journalled by the carrier for rotation about one of second plurality of intermediate gear axes equidistant from and parallel to the said first axis at a second radial distance therefrom, wherein
at least one of the first set of intermediate gears engages the first output gear,
at least one of the second set of intermediate gears engages the second output gear, and
at least one of the first set of intermediate gears engages at least one of the second set of intermediate gears,
characterised in that one of the first and second radial distances between the first and second pluralities of intermediate gear axes and the first axis is greater than the other.

The gear carrier is thus of simple configuration. The output gears, as well as the intermediate gears, are in one embodiment externally toothed gears and the teeth are preferably helical. The intermediate gears can comprise inner and outer rings of gears meshing with each other.

In one embodiment the invention provides a differential unit in which the first output gear is externally toothed and the second output gear is internally toothed and a third output gear is provided having external teeth. The third output gear is surrounded by the second output gear and at least one gear of the second set of intermediate gears meshes with both the second and third output gears. The unit can thus provide two outputs on at least one side between which a choice can be made. The driver of the vehicle can thus choose between, say, a 40:60 front to rear torque split and one of 55:45. A greater torque to the rear axle in a four-wheel drive vehicle can provide better handling characteristics during cornering at low speeds and better traction in low gears, whereas a greater torque to the front axle is advantageous in high speed cornering and affords stability at higher speeds.

Preferably the differential unit has means for opposing movement of the gear system, comprising frictional surfaces or coatings on at least part of the engaging surfaces of one or more of the gears and/or of the carrier. Additionally or instead, the gearing can move within a mineral or synthetic oil or other viscous fluid. The viscous fluid can be an electro-rheological fluid for selectively adjustable damping. The gear system can include gears with teeth arranged to generate an axial loading of the gears, to promote frictional opposition to gear rotation.

In carrying the invention into effect, the arrangement and number of the intermediate gears, the form of the meshing gear teeth, and the effective radii of the various gears, can be selected according to requirements. Where friction promoting coatings or surfaces are employed the nature and location of these can be chosen to obtain a desired torque bias. Likewise, if the gearing is arranged to move in a damping fluid, the characteristics of the fluid can be selected to afford an appropriate torque bias.

The invention is further described below, by way of illustration, with reference to the accompanying drawings, in which:
Figure 1 is a sectional side view of a first differential unit embodying the invention; and
Figure 2 is a cross-section through the differential unit of Figure 1, taken along the lines II-II;
Figure 3 is a cross-sectional side view of a second differential unit embodying the invention;
Figure 4 is a cross-sectional view of the differential unit of Figure 3, taken on the line IV-IV;
Figure 5 is a sectional side view of a third differential unit embodying the invention; and
Figure 6 is a cross-section through the differential unit of Figure 5, taken along the lines VI-VI.

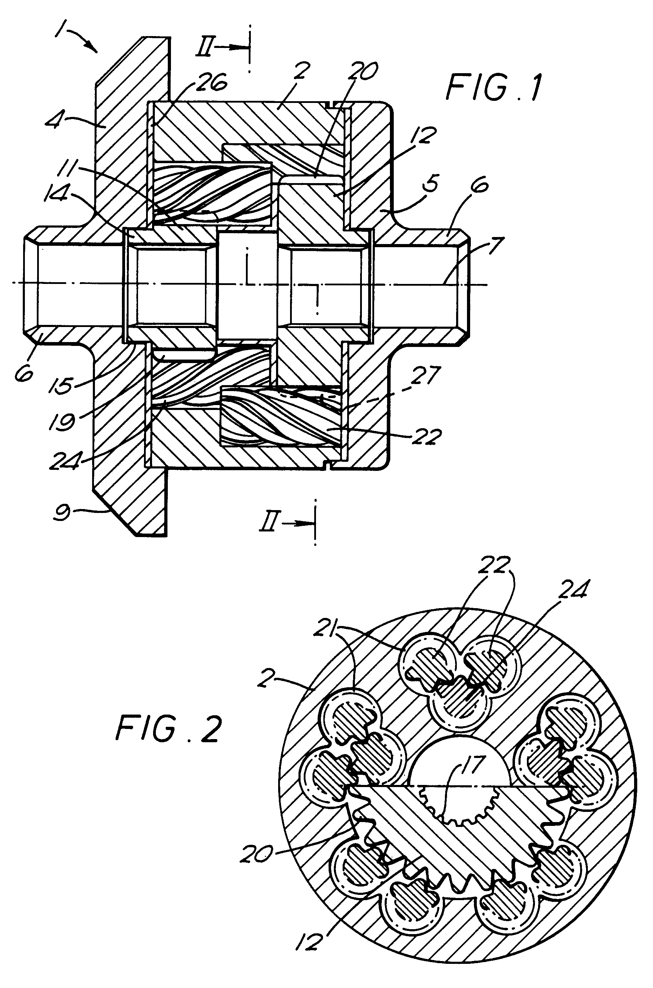

The differential unit 1 of Figures 1 and 2 comprises a differential gear carrier in the form of a generally cylindrical gear housing 2 secured between first and second end plates 4 and 5. Each end plate is annular and is provided with an outwardly extending hub 6 around its central aperture. The end plate 4 is of greater diameter than the housing 2 and the end plate 5. The carrier can be rotatably driven about the axis 7 common to the housing 2 and the end plates by means of gear teeth provided on a bevelled outer peripheral portion 9 of the end plate 4.

The housing 2 contains within it two annular output gears 11 and 12 spaced apart along the axis 7. Each gear has a hub portion 14 around its central aperture extending axially outwardly into a larger diameter bearing portion 15 of the aperture of the respective adjacent one of the end plates 4 and 5.
The central aperture of each of the output gears 11 and 12 is provided with splines 17 for positive rotational connection with an output shaft (not shown) which extends outwardly from the gear through the adjacent hub 7. The output gears 11 and 12 are provided with helical teeth 19 and 20. The gear 11 is of smaller diameter than the gear 12.

The housing 2 also contains five intermediate gear pockets 21 equally angularly spaced around the axis 7. Each pocket 21 contains two outer pinions 22 and one inner pinion 24, all with helical teeth and all journalled on axes parallel to the axis 7. The axes of the two outer pinions 22 are located on a first circle centered on the axis 7, and those of the inner pinions 24 are centred on a concentric circle of smaller diameter. In each pocket, the inner gear 24 meshes with the two outer gears 22 over the axially central portion of the housing 2, between the output gears 11 and 12. All ten of the outer pinions 22 extend to the end plate 5 and mesh with the larger diameter output gear 12 and all five of the inner pinions 24 extend to the end plate 4 and mesh with the smaller diameter output gear 11. The arrangement whereby twice as many pinion gears mesh with the larger diameter output gear 12 as with the smaller diameter output gear 11 tends to reduce gear tooth loadings on the high torque output side of the unit to a level similar to that of its low torque side.

It will be evident that the intermediate gearing constituted by the helically toothed pinions 22 and 24 allows the illustrated differential unit 1 to operate in the same way as conventional differential unit however with an unequal division of the input torque applied to the end plate 4.

The combination of the axial and radial loads due to the helical teeth of the gear system promotes friction between the ends of the gears and pinions and the adjoining surfaces of the housing pockets and the end plates. A resistance to turning is created accordingly to provide a torque biasing effect. This effect can be controlled and selected by suitably coating and/or surfacing the meshing teeth of the gears and pinions. Additionally or instead the gear and pinion end surfaces and the surfaces which they abut can be appropriately coated material and/or surfaced.

Also, or instead, the gear system can be arranged to move within a damping fluid. The system is then sealed within the gear carrier and to achieve this the ends of the housing 2 are received in recesses in the end plates 4 and 5 containing gaskets 26 and 27. The damping fluid can comprise a suitable mineral or synthetic oil, or an electro-rheological fluid, the flow properties or viscosity of which can be selectively controlled by an externally applied electrical field.

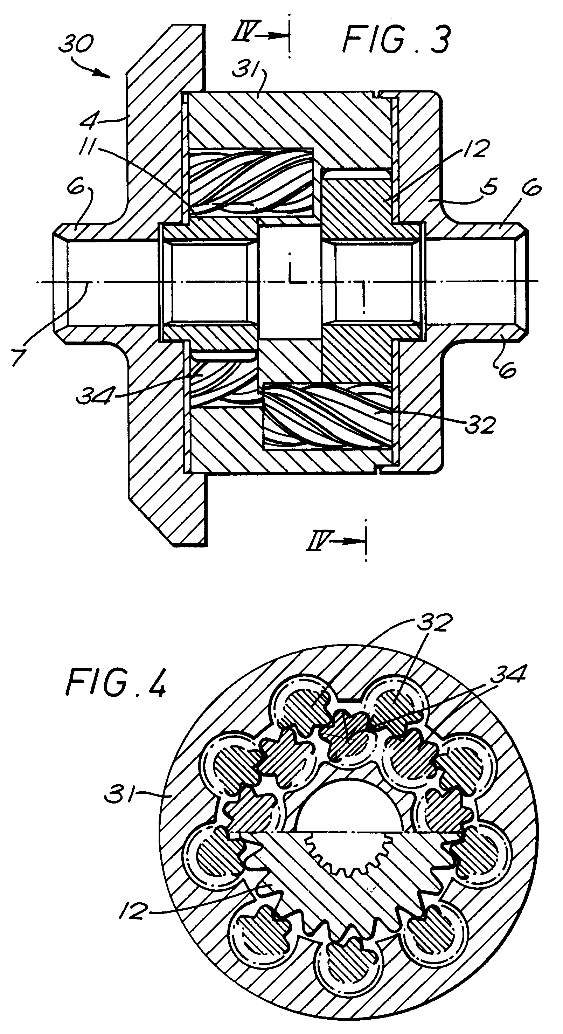

The differential unit 30 of Figures 3 and 4 comprises a gear carrier and output gears which correspond to those of Figures 1 and 2, and which are accordingly designated by the same reference numerals as are used in those figures. The housing 31 secured between the end plates 4 and 5 however journals within it about axes parallel to the axis 7 an outer ring of equally angularly spaced helically teethed pinions 32. An inner ring of like pinions 34, again equally angularly spaced, is similarly journalled, the two rings being concentric with the axis 7. Each of the inner pinions 34 meshes with the two adjacent pinions 32 of the outer ring over the central portion of the housing 31, and each of the inner ring of pinions 34 meshes with the smaller diameter output gear 11, whilst each of the pinions 32 of the outer rings meshes with the larger diameter output gear 12. Here, an equal number of pinion gears meshes with each output gear.

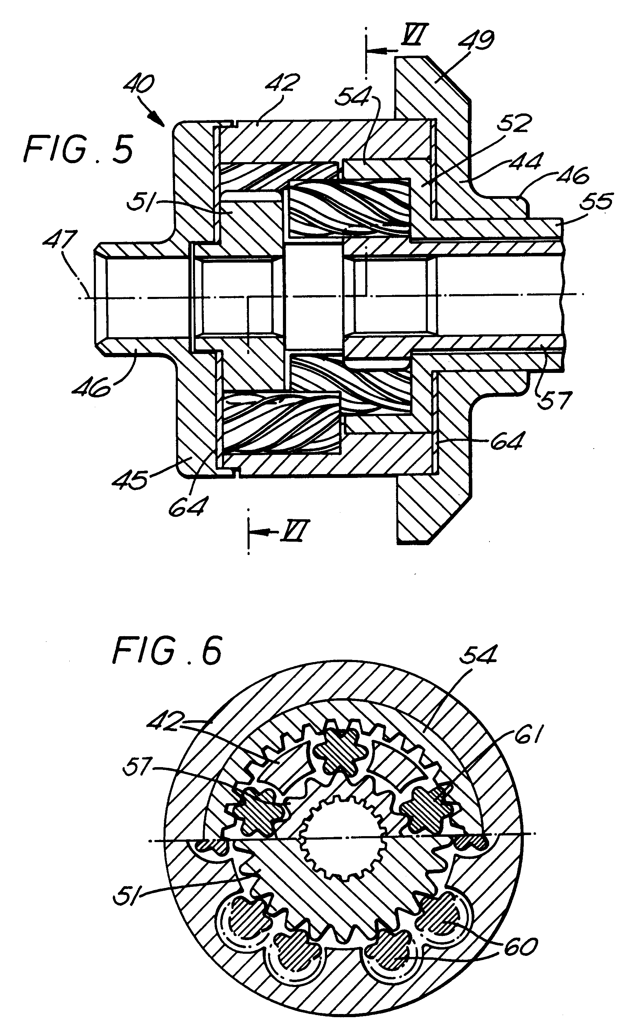

The differential unit 40 of Figures 5 and 6 again comprises a differential gear carrier in the form of a housing 42 secured between first and second end plates 44 and 45, each provided with an outwardly extending hub 46. The carrier can again be rotatably driven about the axis 47 common to the housing 42 and the end plates by means of gear teeth provided on a bevelled outer peripheral portion 49 of the end plate 44.

The gear carrier contains within it at the left-hand end a shown in Figure 5, an output gear 51 having a hub portion around its central aperture extending axially outwardly into a larger diameter bearing portion of the aperture of the adjacent end plate 45. At the right-hand end, the gear carrier contains an outer output gear 52 having an internally toothed sleeve portion 54, an annular wall portion adjacent the end plate 44, and a sleeve portion 55 concentrically received within the hub 46 and extending outwardly of the gear carrier. An inner output gear 57 is concentrically received within the sleeve portion 55 of the outer output gear 52 and is externally toothed within the carrier. The central apertures of the output gears 51 and 57 are splined for connection with output shafts (not shown). The teeth of all three output gears 51,52 and 57 are helical and those of the gear 51 are on a diameter intermediate between those of the gears 52 and 57.

The housing 40 also contains intermediate gearing generally similar in configuration to that of one or other of the differential units 1 and 30. As shown, five intermediate gear pockets equally angularly spaced around the axis 47 each contain two outer pinions 60 and one inner pinion 61, all with helical teeth and all journalled on axes parallel to the axis 47. The axes of the outer pinions 60 are on a circle centered on the axis 47, and those of the inner pinions 61 are centred on a concentric circle of smaller diameter. In each pocket, the inner gear 61 meshes with the two outer gears 60 over the axially central portion of the housing 42, between the output gears, and all ten of the outer pinions 60 extend to the end plate 45 and mesh with the output gear 51 and all five of the inner pinions 61 extend to the end plate 44 and mesh with both the outer output gear 52 and the inner output gear 57.

The drive from the right-hand side of the unit as shown in Figure 5 can be taken from either of the output gears 52 and 57. Because these gears have different effective diameters each different from that of the output gear 51, two different torque splits are thus made available. In matters other than those described, including the possibilities for promoting friction and for effecting damping, it will be understood that the differential units 30 and 40 of Figures 3 and 4 and Figures 5 and 6 can correspond to the unit 1 of Figures 1 and 2.

## Claims

1. A differential unit having a gear carrier (2,4,5;4,5,31;42,44,45) arranged to be rotatably driven about a first axis (7;47) thereof,
output gearing comprising a first output gear (11;51) of a first diameter and a second output gear (12;54) of a second larger diameter journalled by the carrier for rotation about said first axis, and
intermediate gearing comprising
a first set of intermediate gears (24;34;60) each journalled by the carrier for rotation about one of a first plurality of intermediate gear axes equidistant from and parallel to the said first axis (7;47) at a first radial distance therefrom and
a second set of intermediate gears (22;32;61) each journalled by the carrier for rotation about one of second plurality of intermediate gear axes equidistant from and parallel to the said first axis (7;47) at a second radial distance therefrom, wherein
at least one of the first set of intermediate gears (24;34;60) engages the first output gear (11;51),
at least one of the second set of intermediate gears (22;32;61) engages the second output gear (12;54), and
at least one of the first set of intermediate gears (24;34;60) engages at least one of the second set of intermediate gears (22;32;61),
characterised in that one of the first and second radial distances between the first and second pluralities of intermediate gear axes and the first axis (7;47) is greater than the other.

2. A differential unit as claimed in Claim 1 wherein the first output gear (51) has external teeth

3. A differential unit as claimed in Claim 2 wherein the output gearing comprises a third output gear (57) having external teeth, surrounded by the second output gear (52), at least one gear of the second set of intermediate gears (61) meshing with both the second and third output gears.

4. A differential unit as claimed in Claim 3 wherein the first output gear (51) is of a tooth diameter between the tooth diameters of the second and third output gears (54,57).

5. A differential unit as claimed in Claim 4 wherein the first radial distance between the first plurality of intermediate gear axes and the first axis (7;47) is greater than the second radial distance between the second plurality of intermediate gears and the first axis (7;47).

6. A differential unit as claimed in Claim 1 wherein the first (51) and second (54) output gears are both externally toothed gears.

7. A differential unit as claimed in Claim 6 wherein the second radial distance between the second plurality of intermediate gear axes and the first axis (7;47) is greater than the first radial distance between the first plurality of intermediate gear axes and the first axis (7;47).

8. A differential unit as claimed in any one of the preceding claims wherein the intermediate gears (24;34;60;22;32;61) and the output gears (11;51;12;54) all have helical teeth.

9. A differential unit as claimed in any preceding claim having means opposing relative rotation of the output gears.

10. A differential unit as claimed in Claim 9 wherein the gear carrier contains intermediate gear pockets (21) for containing the intermediate gears (24;34;60;22;32;61).

11. A differential unit as claimed in Claim 10 or Claim 12 wherein the gear carrier (2,4,5;4,5,31;42,44,45) comprises a sealed housing containing output and intermediate (24;34;60;22;32;61) gearing and the means opposing gear rotation comprises a viscous fluid within said housing.

12. A differential unit as claimed in Claim 11 wherein the viscous fluid comprises an electrorheological fluid.

13. A differential unit as claimed in Claim 9, 10, 11 or 12 wherein the means opposing gear rotation comprises a frictional surface on at least part of at least one gear of the gearing and/or on a face of said carrier on which a gear of the gearing slides.

14. A method of dividing the engine drive of a road vehicle between the front and rear wheels of the vehicle in which a differential unit according to any one of the preceding claims is connected between the engine and the wheels to receive drive from the engineand to divide torque unequally between the front and rear wheels.

## Patentansprüche

1. Differentialeinheit mit einem Getriebeträger (2, 4, 5; 4, 5, 31; 42, 44, 45), der um eine erste Achse (7; 47) drehbar und antreibbar ist,
einem Abtriebsgetriebe, das ein erstes Abtriebsrad (11; 51) mit einem ersten Durchmesser und ein zweites Abtriebsrad (12; 54) mit einem zweiten, größeren Durchmesser, die am Träger um die erste Achse drehbar gelagert sind, aufweist, und einem Zwischengetriebe, welches aufweist:
einen ersten Satz Zwischenräder (24; 34; 60), von denen jedes am Träger um eine von mehreren Zwischenradachsen, die abstandsgleich von und parallel zu der ersten Achse (7; 47) in einem ersten Radialabstand davon liegen, drehbar gelagert ist,
einen zweiten Satz Zwischenräder (22; 32; 61), von denen jedes am Träger um eine von mehreren Zwischenradachsen, die abstandsgleich von und parallel zu der ersten Achse (7; 47) in einem zweiten Radialabstand davon liegen, drehbar gelagert ist,
wobei wenigstens ein Rad des ersten Satzes von Zwischenrädern (24; 34; 60) in das erste Abtriebsrad (11; 51) eingreift,
wenigstens ein Rad des zweiten Satzes von Zwischenrädern (22; 32; 61) in das zweite Abtriebsrad (12; 54) eingreift, und wenigstens ein Rad des ersten Satzes von Zwischenrädern (24; 34; 60) in wenigstens ein Rad des zweiten Satzes von Zwischenrädern (22; 32; 61) eingreift,
dadurch **gekennzeichnet,** daß einer der ersten und zweiten Radialabstände zwischen den mehreren ersten und zweiten Zwischenradachsen und der ersten Achse (7; 47) größer als der andere ist.

2. Differentialeinheit nach Anspruch 1,
bei der das erste Abtriebsrad (51) eine Außenverzahnung aufweist.

3. Differentialeinheit nach Anspruch 2,
bei der das Abtriebgetriebe ein drittes Abtriebsrad (57) mit einer Außenverzahnung aufweist, das von dem zweiten Abtriebsrad (52) umschlossen ist, wobei wenigstens ein Rad des zweiten Satzes von Zwischenrädern (61) sowohl mit dem zweiten als auch dem dritten Abtriebsrad kämmt.

4. Differentialeinheit nach Anspruch 3,
bei der das erste Abtriebsrad (51) einen Verzahnungsdurchmesser aufweist, der zwischen den Verzahnungsdurchmessern des zweiten und dritten Abtriebsrades (54, 57) liegt.

5. Differentialeinheit nach Anspruch 4,
bei der der erste Radialabstand zwischen der ersten Mehrzahl von Zwischenradachsen und der ersten Achse (7; 47) größer ist als der zweite Radialabstand zwischen der zweiten Mehrzahl von Zwischenrädern und der ersten Achse (7; 47).

6. Differentialeinheit nach Anspruch 1,
bei der das erste und zweite Abtriebsrad (51, 54) beides außenverzahnte Räder sind.

7. Differentialeinheit nach Anspruch 6,
bei der der zweite Radialabstand zwischen der zweiten Mehrzahl von Zwischenradachsen und der ersten Achse (7; 47) größer ist als der erste Radialabstand zwischen der ersten Mehrzahl von Zwischenradachsen und der ersten Achse (7; 47).

8. Differentialeinheit nach einem der vorhergehenden Ansprüche,
bei der alle Zwischenräder (24; 34; 60; 22; 32; 61) und alle Abtriebsräder (11; 51; 12; 54) eine Schrägverzahnung aufweisen.

9. Differentialeinheit nach einem der vorhergehenden Ansprüche,
mit Mitteln zum Hemmen der Drehbewegung der Abtriebsräder relativ zueinander.

10. Differentialeinheit nach Anspruch 9,
bei der der Getriebeträger Zwischenradkammern (21) zum Aufnehmen der Zwischenräder (24; 34; 60; 22; 32; 61) aufweist.

11. Differentialeinheit nach Anspruch 10 oder Anspruch 12,
bei der der Getriebeträger (2, 4, 5; 4, 5, 31; 42, 44, 45) ein abgedichtetes Gehäuse aufweist, das das Abtriebsgetriebe und das Zwischengetriebe (24; 34; 60; 22; 32; 61) enthält und bei der das Mittel zum Hemmen der Raddrehung ein zähflüssiges Fluid innerhalb des Gehäuses ist.

12. Differentialeinheit nach Anspruch 11,
bei der das zähflüssige Fluid ein elektrorheologisches Fluid ist.

13. Differentialeinheit nach Anspruch 9, 10, 11 oder 12,
bei der das Mittel zum Hemmen der Raddrehung eine Reibungsfläche an wenigstens einem Teil wenigstens eines Rades des Getriebes und/oder an einer Fläche des Trägers, auf der ein Rad des Getriebes gleitet, aufweist.

14. Verfahren zum Aufteilen der Motorantriebskraft eines Straßenfahrzeugs zwischen den Vorder- und Hinterrädern des Fahrzeugs, bei dem eine Differentialeinheit nach einem der vorhergehenden Ansprüche zwischen den Antriebsmotor und die Räder geschaltet ist, daß es den Antrieb von dem Motor aufnimmt und das Drehmoment ungleich zwischen den Vorder- und Hinterrädern aufteilt.

## Revendications

1. Ensemble différentiel comportant un support d'engrenages (2, 4, 5 ; 4, 5, 31 ; 42, 44, 45) disposé pour être entraîné en rotation autour d'un premier axe (7 ; 47) de celui-ci ;
un ensemble d'engrenages de sortie comprenant un premier engrenage de sortie (11, 51) d'un premier diamètre et un second engrenage de sortie (12 ; 54) d'un second diamètre plus grand, montés à tourillons sur le support pour rotation autour dudit premier axe ; et,
un ensemble d'engrenages intermédiaires comprenant :
un premier jeu d'engrenages intermédiaires (24 ; 34 ; 60) chacun monté à tourillons sur le support pour rotation autour de l'un d'une première pluralité d'axes d'engrenage intermédiaire équidistants dudit premier axe (7 ; 47) et parallèles à celui-ci à une première distance radiale de celui-ci ; et
un second jeu d'engrenages intermédiaires (22 ; 32 ; 61) chacun monté à tourillons sur le support pour rotation autour de l'un d'une seconde pluralité d'axes d'engrenage intermédiaire équidistants dudit premier axe (7 ; 47) et parallèles à celui-ci à une seconde distance radiale de celui-ci, dans lequel :
au moins un du premier jeu d'engrenages intermédiaires (24 ; 34 ; 60) engrène avec le premier engrenage de sortie (11 ; 51) ;
au moins un du second jeu d'engrenages intermédiaires (22 ; 32 ; 61) engrène avec le second engrenage de sortie (12 ; 54) ; et,
au moins un du premier jeu d'engrenages intermédiaires (24 ; 34 ; 60) engrène avec au moins un du second jeu d'engrenages intermédiaires (22 ; 32 ; 61) ;
caractérisé en ce que l'une de la première et de la seconde distances radiales entre la première et la seconde pluralités d'axes d'engrenage intermédiaire et le premier axe (7 ; 47) est plus grande que l'autre.

2. Ensemble différentiel selon la revendication 1, dans lequel le premier engrenage de sortie (51) possède une denture externe.

3. Ensemble différentiel selon la revendication 2, dans lequel l'ensemble d'engrenages de sortie comprend un troisième engrenage de sortie (57), qui a une denture externe, entouré par le deuxième engrenage de sortie (52), au moins un engrenage du second jeu d'engrenages intermédiaires (61) étant en prise avec à la fois le deuxième et le troisième engrenages de sortie.

4. Ensemble différentiel selon la revendication 3, dans lequel le premier engrenage de sortie (51) a un diamètre de denture qui est situé entre les diamètres de denture des deuxième et troisième engrenages de sortie (54 ; 57).

5. Ensemble différentiel selon la revendication 4, dans lequel la première distance radiale entre la première pluralité d'axes d'engrenage intermédiaire et le premier axe (7 ; 47) est plus grande que la seconde distance radiale entre la seconde pluralité d'axes d'engrenage intermédiaire et le premier axe (7 ; 47).

6. Ensemble différentiel selon la revendication 1, dans lequel les premier (51) et second (54) engrenages de sortie sont tous deux des engrenages à denture externe.

7. Ensemble différentiel selon la revendication 6, dans lequel la seconde distance radiale entre la seconde pluralité d'axes d'engrenage intermédiaire et le premier axe (7 ; 47) est plus grande que la première distance radiale entre la première pluralité d'axes d'engrenage intermédiaire et le premier axe (7 ; 47).

8. Ensemble différentiel selon l'une quelconque des revendications précédentes, dans lequel les engrenages intermédiaires (24 ; 34 ; 60 ; 22 ; 32 ; 61) et les engrenages de sortie (11 ; 51 ; 12 ; 54) ont tous une denture hélicoïdale.

9. Ensemble différentiel selon l'une quelconque des revendications précédentes, comportant un moyen s'opposant à la rotation relative des engrenages de sortie.

10. Ensemble différentiel selon la revendication 9, dans lequel le support d'engrenages contient des poches à engrenages intermédiaires (21) pour contenir les engrenages intermédiaires (24 ; 34 ; 60 ; 22 ; 32 ; 61).

11. Ensemble différentiel selon la revendication 10 ou la revendication 12, dans lequel le support d'engrenages (2, 4, 5 ; 4, 5, 31 ; 42, 44, 45) comprend un carter étanche contenant les ensembles d'engrenages de sortie et intermédiaires (24 ; 34 ; 60 ; 22 ; 32 ; 61) et dans lequel le moyen s'opposant à la rotation d'engrenages comprend un fluide visqueux à l'intérieur dudit carter.

12. Ensemble différentiel selon la revendication 11, dans lequel le fluide visqueux comprend un fluide électrorhéologique.

13. Ensemble différentiel selon la revendication 9, 10, 11 ou 12, dans lequel le moyen s'opposant à la rotation d'engrenages comprend une surface à friction sur au moins une partie d'au moins un engrenage de l'ensemble d'engrenages et/ou sur une face dudit support sur laquelle glisse un engrenage de l'ensemble d'engrenages.

14. Procédé de répartition de la force motrice d'un véhicule routier entre les roues avant et les roues arrière du véhicule, dans lequel un ensemble différentiel selon l'une quelconque des revendications précédentes est monté entre le moteur et les roues, pour recevoir la force motrice du moteur et pour répartir le couple de façon inégale entre les roues avant et les roues arrière.
